# EUROPEAN PATENT APPLICATION

(11) **EP 1 820 623 A1**
(43) Date of publication of application: **22.08.2007**
(21) Application number: 07250487.1
(22) Date of filing: 06.02.2007
(51) Int. Cl.: B29C 63/02, B29C 73/10, E04D 3/365, E04D 3/38

(54) **A device and method for applying paint**

(30) Priority: 16.02.2006 GB 0603100
(71) Applicant: Corus UK Limited, London SW1P 4WY (GB)
(72) Inventor: Ponting, Christopher, Flint, Flintshire CH6 5NP (GB)
(74) Representative: Evans, Claire

(57) **Abstract**

A device for applying paint, the device comprising a self-supporting film of paint.

## Description

The invention relates to a device and method for applying paint, and to two uses of the device.

It is an object of the invention to provide a new device for applying paint.

According to a first aspect, the invention provides a device for applying paint, the device comprising a self-supporting film of paint.

With the device of the invention, it is possible to apply a uniform layer of paint with a good finish. The device is particularly useful in applying paint to coated substrates such as the coated metal cladding used in building. Air drying touch up paints are usually used for this purpose, but it is generally not possible to match the exact colour and technical performance of the original coating. For example, touch up paints will usually change colour or fail well before the original coating. Moreover, matching the colour of the original coating is labour intensive. With the device of the invention, it is possible to use the same material for the self-supporting film of paint as was used in the original coating, with the result that it is possible to achieve an exact colour and performance match with the original coating. The device has the added advantage that it is easy to apply by a non skilled workman.

The paint may be thermoplastic, for example, the paint may be a thermoplastic plastisol. If the paint is thermoplastic, it will adhere to other thermoplastic paints such as the plastisols used in coating metal cladding by hot air welding, provided that they are chemically compatible. Accordingly, where the device is to be applied to a coated substrate, no adhesive may be required to adhere the device to the substrate.

Alternatively, the paint may be thermosetting.

An adhesive may be applied to one side of the film of paint. If the paint is thermosetting, an adhesive will usually be necessary to adhere the device to the substrate.

The adhesive may be covered by release film.

The film of paint may be textured. The coated substrates used in metal cladding are often textured, and it is not possible to replicate these textures with touch up paint. With the device of the invention, however, it is possible to obtain an exact match of the texture of the original coating as the same method may be used to produce the texture as was used in the coated substrate.

The device may be formed in a sheet or roll. The will aid in use of the device.

According to a second aspect, the invention provides a method of manufacturing a device for applying paint according to the invention, the method comprising the steps of:
a) applying a layer of paint to a substrate,
b) allowing the layer of paint to dry or cure; and
c) removing the layer of paint from the substrate.

The method may further comprise the step of:
d) applying an adhesive to one side of the layer of paint.

The method may further comprise the step of:
e) applying a release film to the adhesive.

The substrate may be unprimed. The applicant has found that the layer of paint may be more readily removed from the substrate if the substrate is unprimed.

The substrate may be cleaned before applying the layer of paint.

The substrate may be a metal substrate.

The paint may be coated onto the substrate, for example by roller coating.

Any suitable method may be used to dry/cure the paint. For example, the layer of paint may be heated after it has been applied to the substrate.

The layer of paint may be texturised after it has been applied to the substrate, for example by applying an embossed roller to the layer of paint.

The layer of paint may be removed from the substrate by a pickup roller or doctor blade.

According to a third aspect, the invention provides the use of the device according to the invention to repair a paint defect.

The device is particularly useful in repairing paint defects in coated substrates such as the coated metal cladding used in building. Air drying touch up paints are usually used for this purpose. With the device of the invention, it is possible to use the same material/method of producing texture as was used in the original coating, with the result that it is possible to achieve an exact colour, performance, and texture match with the original coating.

According to a fourth aspect, the invention provides the use of a device according to the invention for preventing peeling and/or corrosion and/or water penetration at the edges of a painted substrate.

The device is particularly useful for use in preventing peeling and/or corrosion and/or water penetration in a coated substrate such as that used in roof cladding.

It is known to prevent peeling, corrosion and water penetration at the edges of coated roof cladding by applying butyl rubber sealant strip where the roof cladding sheets overlap.

A problem with using butyl sealant strips is that, where the coating has been incorrectly applied, there will be premature failing of the coating which results in peeling and corrosion. Moreover, where the butyl sealant strips have been incorrectly positioned, the overlaps will open out when screws are used to join the overlaps together which will result in water penetration.

The applicant has found that using the device according to the invention in place of the butyl sealant strips allows the cladding sheets to fit closer to each other, thereby providing improved sealing and reduction of bird-beaking. The use of the device according to the invention also results in an improved appearance, as it is possible to use the same material for the self-supporting film of paint as was used in the original coating on the roof cladding, with the result that it is possible to achieve an exact colour and performance match with the original coating. In certain applications, the use of the device according to the invention also improves the air tightness of the building.

The invention will now be illustrated by way of example with reference to the following drawings of which:
Figure 1 shows a cross-sectional view of a first embodiment of a device for applying paint according to the invention;
Figure 2 shows a cross-sectional view of a second embodiment of a device for applying paint according to the invention.
Figure 3 shows a perspective view of a roof using a prior art method to prevent peeling and/or corrosion and/or water penetration at the edges of coated roof cladding; and
Figure 4 shows a cross-sectional view of the roof shown in Figure 2.

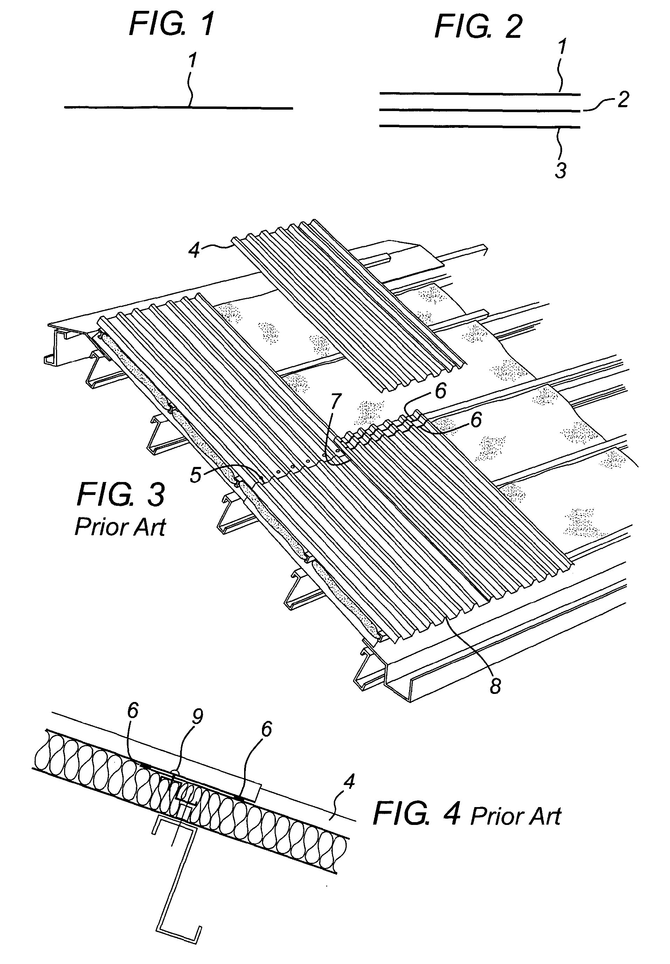

The embodiment shown in Figure 1 comprises a self-supporting film of paint (1).

The self-supporting film of paint (1) may be manufactured using the same apparatus as is used in conventional coil coating processes.

A coil of cold reduced, zinc coated steel or aluminium is mounted on to a pay off reel at the start of the coating line. The coil is unwound and passed through an alkaline cleaning operation to remove any surface impurities followed by a rinse. In a conventional coil coating process, the next step would be to apply a pre-treatment and a primer coating, usually by roller coating. This is not undertaken in this instance, and the coil bypasses this operation completely.

A thermoplastic paint such as a thermoplastic plastisol paint is then coated onto the metal strip using two or three rubber applicator rollers. After coating the metal strip with wet paint, the strip is then heated, in the case of plastisol, to approximately 216°C. Various other methods may be used to heat and cure the paint such as convection, infra-red, near infra-red, induction, electron beam and UV.

The plastisol paint is given a texture coating by applying an embossed metal roller into the still soft and hot paint with a pressure of up to 600psi. Cooling of the textured paint to room temperature is achieved by water or forced air-cooling.

The resulting textured paint film is gathered from the metal strip by a pick-up roller/doctor blade and is then wound on to a cardboard tube.

Alternatively, the self-supporting film of paint (1) may be manufactured using the same apparatus as is used in conventional transfer coating processes.

A thermoplastic paint such as a thermoplastic plastisol paint is coated on to a texturised release paper made from silicone or some other material to which the paint will not adhere.

The coated release paper is then heated, in the case of plastisol, to approximately 216°C. Various other methods may be used to heat and cure the paint such as convection, infra-red, near infra-red, induction, electron beam and UV.

The resulting texturised paint film is then gathered from the release paper by a pick-up roller/doctor blade.

If it is desired to obtain a non-texturised film, then a non-texturised release paper should be used.

As the embodiment shown in Figure 1 is made from a thermoplastic paint, it will adhere to other thermoplastic paints by hot air welding, provided that they are of the same family of chemical composition. This means that the embodiment shown in Figure 1 does not require any adhesive when it is used on a coated substrate such as coated metal cladding.

As the device may be manufactured using the same apparatus as that used in coil coating or transfer coating processes, it is easy to manufacture the device from the same material which is used when manufacturing coated substrates, with the result that it is possible to exactly match the colour, performance and texture of the coated substrate on which the device is to be used.

The embodiment shown in Figure 2 is the same as that shown in Figure 1 apart from the fact that it also includes a layer of adhesive (2) applied to one side of the self-supporting film of paint (1) and a release paper (3) to cover the adhesive (2).

The embodiment shown in Figure 2 is manufactured by the same methods as the embodiment shown in Figure 1, the adhesive (2) and release paper (3) being applied to the self-supporting film of paint (1) after the film (1) has been removed from the metal strip.

The embodiment shown in Figure 2 is particularly useful for thermosetting paints which cannot be adhered to other paints by hot air welding.

To use either of the embodiments described above to repair a paint defect, a patch which is large enough to cover the defect is cut out from the device with scissors. For the first embodiment, the patch is adhered to the defect using hot air welding. For the second embodiment, the patch is adhered to the defect by removing the release paper (3) and adhering the patch to the defect using the adhesive layer (2).

Figures 3 and 4 show a roof using a prior art method to prevent peeling and/or corrosion and/or water penetration at the edges of coated roof cladding.

The roof uses coated steel formed into trapezoidal cladding sheets. the cladding has to be restricted in length to what can be practically manhandled by the roof contractor. This usually means that several sections of cladding (4) will be used depending on the length of the roof.

At each overlap (end lap 5) of roof cladding (4) there will be an exposed unpainted edge of steel. In the known method of preventing peeling, corrosion and water penetration at these edges, two runs of a continuous butyl rubber sealant strip (6) are applied between each overlap (5) at a set distance. The thickness of the butyl strip (6) is 6mm. Where each section of cladding (4) overlaps each other to clad the width of roof (side lap 7), butyl strip (6) has to be used for low-pitched roof slopes. The end of the cladding (4) which sheds rainwater into the gutter (eaves 8) will have an exposed unpainted edge of steel.

### Problems that can and do occur are twofold:

Where the constituent layers of protection afforded by the coil coater have been incorrectly applied, there will be premature failure of the coating which will manifest itself in two ways: corrosion of the steel (edge corrosion) peeling/blistering of the top coating from the edge (edge peel).

Where the butyl sealant strips have been incorrectly positioned, this will cause the end laps to open out (bird-beaking) when the fastening screws (9) are driven to join the end laps together. Dirt accumulation and rainwater driven up by the wind can then cause accelerated corrosion to the unpainted edge of steel. Underdriving the fastening screws, to reduce bird-beaking, increases the possibility of leaks through the fasteners.

Using a device according to the invention in place of the butyl sealant strips on the end and side laps mitigates the above problems. The device is used in the same manner as to repair paint defects although the device is provided in the form of a roll of tape rather than a sheet.

The absence of butyl sealant strips allows the cladding sheets to fit closer to each other, thereby improving sealing and eliminating bird-beaking. The use of the device according to the invention also results in an improved appearance, and, in certain applications, improved air tightness of the building.

Moreover, any damage caused to the cladding by the roll forming process can be easily repaired using the device according to the invention.

Accessories such as soakers, flashings and roof lights which currently rely on butyl sealant strips, benefit by the use of the device according to the invention.

## Claims

1. A device for applying paint, the device comprising a self-supporting film of paint.

2. A device according to claim 1, wherein the paint is thermoplastic, preferably a plastisol.

3. A device according to claim 1, wherein the paint is thermosetting.

4. A device according to any preceding claim, wherein an adhesive is applied to one side of the film of paint.

5. A device according to claim 4, wherein the adhesive is covered by a release film.

6. A device according to any preceding claim, wherein the film of paint is textured.

7. A device according to any preceding claim, wherein the device is formed in a sheet or roll.

8. A method of manufacturing a device for applying paint according to any preceding claim, the method comprising the steps of:
a) applying a layer of paint to a substrate,
b) allowing the layer of paint to dry or cure, and
c) removing the layer of paint from the substrate.

9. A method according to claim 8, wherein the method further comprises the step of:
d) applying an adhesive to one side of the layer of paint.

10. A method according to claim 8 or claim 9, wherein the method further comprises the step of: '
e) applying a release film to the adhesive.

11. A method according to any of claims 8 to 10, wherein the paint is coated onto the substrate.

12. A method according to any of claims 10 to 11, wherein the layer of paint is heated after it has been applied to the substrate.

13. A method according to any of claims 8 to 12, wherein the substrate is a metal substrate.

14. A method according to any of claims 8 to 13, wherein the substrate is unprimed.

15. A method according to any of claims 8 to 14, wherein the substrate is cleaned before applying the layer of paint.

16. A method according to any of claims 8 to 15, wherein the layer of paint is texturised after it has been applied to the substrate, preferably by applying an embossed roller to the layer of paint.

17. A method according to any of claims 8 to 12, wherein the substrate is a release paper, preferably a silicone release paper.

18. A method according to claim 17, wherein the release paper is texturised.

19. A method according to any of claims 8 to 18, wherein the layer of paint is removed from the substrate by a pick up roller or doctor blade.

20. Use of a device according to any of claims 1 to 7, for repairing a paint defect, preferably a paint defect in a coated substrate, more preferably a paint defect in coated metal cladding.

21. Use of a device according to any of claims 1 to 7, for preventing peeling and/or corrosion and/or water penetration at the edges of a painted substrate, preferably a coated substrate, more preferably coated roof cladding.
